# EUROPEAN PATENT APPLICATION

(11) **EP 4 714 266 A1**
(43) Date of publication of application: **25.03.2026**
(21) Application number: 25203553.0
(22) Date of filing: 22.09.2025
(51) Int. Cl.: A01N 25/08, A01N 25/12, A01N 59/00, A01P 1/00, C11D 3/39, A01N 25/34

(54) **ANTIMICROBIAL SURFACE TREATMENT POWDERS FREE OF QUATERNARY AMMONIUM COMPOUNDS OR BLEACH ACTIVATORS**

(30) Priority: 20.09.2024 US 202463697129 P
(71) Applicant: Sterilex LLC, Hunt Valley, MD 21030 (US)
(72) Inventor: Nathanson Kolas, Robyn Beth, Hunt Valley, MD, 21030 (US); Urtz, Bruce Edward, Hunt Valley, MD, 21030 (US)
(74) Representative: Forresters IP LLP

(57) **Abstract**

Surface treatment powders including a peroxide source active, an anionic surfactant adjuvant, and an alkaline salt are disclosed. The surface treatment powders are substantially free of quaternary ammonium compounds and bleach activators. The surface treatment powders exhibit biocidal activity under EN 1276 and fungicidal activity under modified EN 1650 or modified EN 13697. Methods of making and using the surface treatment powders are further disclosed.

## Description

### CROSS-REFERENCE TO RELATED APPLICATIONS

The present application claims the priority benefit of U.S. Provisional Patent App. Serial No. 63/697,129, filed September 20, 2024, which is hereby incorporated herein by reference in its entirety.

### BACKGROUND

Powdered sanitizers and disinfectants are used in a variety of household, institutional, and industrial settings to control or eliminate the movement of bacteria, and other pathogens, across areas within a plant, farm, kitchen, or workspace. Effective surface treatment compositions that have the capacity to disinfect and/or sanitize ("disinfect/sanitize") surfaces in addition, or in alternative, to being used to clean surfaces, are especially useful in environments that are vulnerable to microbial contamination.

Powdered surface treatment compositions that disinfect/sanitize are known in the industry, but are less common than liquid ones. Some known surface treatment powders require dilution in water prior to application to a surface to be treated. Other known surface treatment powders are applied dry and allowed to reside on a surface to be treated over a period of time. To effectively treat the surface to which such a surface treatment powder has been applied, active ingredients in the powder must be contacted with liquid, which can occur incidentally, e.g., via spills and/or purposefully, through the addition of liquid to the surface treatment powder and/or to the surface on which it resides including, but not limited to water that is used in processing, during cleaning, disinfection and/or sanitizing, etc.

Often, these powdered sanitizer products incorporate a quaternary ammonium compound ("QAC"), a bleach activator, or mixtures of QACs and bleach activators. QAC's are a potent and broad-spectrum antimicrobial that have been in extensive use for decades. However, their charged nature, resulting in an affinity to adsorb onto surfaces, often prevents easy rinsing and contributes to a risk of residuals contaminating products, and/or killing wastewater organisms and dairy cultures. Additionally, the regulatory landscape for this class of antimicrobials is continuing to tighten globally and QAC's are increasingly banned by regulatory agencies around the globe.

Powdered sanitizers can alternatively be formed with bleach activators that sanitize through peroxidation of hydrogen peroxide released from persalts using a bleach activator, such as tetraacetylethylenediamine ("TAED"), to form peracetic acid in situ. Peracetic acid is more efficacious than hydrogen peroxide for sanitizing at lower active levels, however, the long-term shelf stability of these formulations is impacted by the bleach activator reacting with hydrogen peroxide leading to lifespan issues both in storage and in use where the reaction is especially accelerated upon exposure to environmental moisture.

Additionally, powdered sanitizers must be efficacious in a variety of plant environments ranging from very wet to dry processing. Pathogenic organisms such as *Escherichia coli, Salmonella enterica,* and *Listeria monocytogenes* can live on any surface that is not properly cleaned, particularly moist surfaces such as floors and drains. Unlike liquid products, dry powders rely on externally applied sources of water to solubilize and activate the various chemistries. In a dry processing environment, these products can be applied and remain stable and active for extended periods, until moisture necessary to activate the product is encountered, thus not contributing to the introduction of additional liquid to the facility and the associated risk of microbial proliferation.

### SUMMARY

According to one embodiment, a surface treatment powder includes a) a peroxide source active; b) anionic surfactant adjuvant; and c) an alkaline salt.

According to another embodiment, a surface treatment powder consists essentially of by weight percent: about 50% to about 70% sodium percarbonate; about 1.0% to about 10% of sodium lauryl sulfate, sodium dodecylbenzene sulfonate, or a combination thereof; about 20% to about 50% of sodium bicarbonate; about 0.5% to about 10% of ethylenediaminetetraacetic acid ("EDTA"); about 0.01% to about 2.0% polyethylene glycol; and colorant.

According to another embodiment, a surface treatment powder consists of by weight percent: about 50% to about 70% sodium percarbonate; about 1.0% to about 10% of sodium lauryl sulfate, sodium dodecylbenzene sulfonate, or a combination thereof; about 20% to about 50% of sodium bicarbonate; about 0.5% to about 10% of ethylenediaminetetraacetic acid ("EDTA"); about 0.01% to about 2.0% polyethylene glycol; and colorant.

According to a further embodiment, a method of treating a surface is disclosed. The method includes applying to the surface a surface treatment powder. The surface treatment powder includes a) a peroxide source active; b) anionic surfactant adjuvant; and c) an alkaline salt.

### BRIEF DESCRIPTION OF DRAWINGS

The accompanying drawings are incorporated in and forms a part of the specification and illustrates aspects of the present disclosure, and together with the description serve to explain the principles of the disclosure.
FIG. 1 depicts a graph of particle size distribution in two exemplary surface treatment powders.
FIGS. 2 and 3 depict graphs illustrating the log kill of various Example surface treatment powders against *Klebsiella aerogenes* and *Staphylococcus aureus.*
FIG. 4 depicts a graph illustrating the log kill of various Example surface treatment powder compositions against *Staphylococcus aureus.*
FIG. 5 depicts a graph illustrating testing of various Example surface treatment powders against *Staphylococcus aureus* in accordance with EN 1276 (2019).
FIG. 6 depicts a graph illustrating the stability of hydrogen peroxide over time for various Example surface treatment powders having varying chelants and loading levels.
FIGS. 7 and 8 depict charts showing the recovery of bacteria strains after a "Mini Boot" test.
FIG. 9 depicts a graph illustrating the moisture uptake of Example compositions.
FIG. 10 depicts a graph illustrating the efficacy of Example 13 against *Listeria monocytogenes* using ambient moisture.
FIG. 11 depicts a graph illustrating the efficacy of Example 13 against *Salmonella enterica* using ambient moisture.

### DETAILED DESCRIPTION

As will be described herein, improved antimicrobial surface treatment powders are disclosed that are free of quaternary ammonium compounds ("QACs") and bleach activators. The surface treatment powders are shelf stable and include a peroxide source as a disinfectant active and a solid anionic surfactant as an adjuvant to accelerate the disinfectant properties of the peroxide source. Combination of the peroxide source active and the anionic surfactant adjuvants can enable the surface treatment powders to have desirable efficacy against fungi and bacteria including catalase-positive bacteria. In aspects, the disclosed compositions and/or methods comprise, consist of, or consist essentially of the elements of the compositions and/or methods as described herein, as well as any additional or optional element described herein or otherwise useful in the disinfecting/sanitizing of a surface.

As used herein, "effectively treats" means a reduction of microbial growth on a surface to which a surface treatment powder has been applied, as compared to the microbial growth on a comparable control surface to which no surface treatment powder has been applied. Treatment of a surface may include cleaning, disinfecting and/or sanitizing a surface.

"Comprising" as used herein, means that the various components, ingredients, or steps, can be conjointly employed in practicing the present invention. Accordingly, the term "comprising" encompasses the more restrictive terms "consisting essentially of" and "consisting of."

"Disinfectant" as used herein, refers to a substance or a mixture of substances (including solutions) that destroy or irreversibly inactivate bacteria, fungi and viruses, but not necessarily bacterial spores, in an inanimate environment or on a surface (e.g., in or on a substrate).

"Foot pan" as used herein means a receptacle that is used to treat footwear. Foot pans include pans, mats, floors and any other receptacles or surfaces that hold surface treatment powders, for example, cleaners, disinfectants and/or sanitizers.

"Sanitizer" as used herein, means a substance or a mixture of substances (including solutions) that reduce a bacterial population in an inanimate environment (e.g., a substrate) by significant numbers, (e.g., a 3 log 10 reduction) or more, but that does not destroy or eliminate all bacteria.

"Disinfectant/sanitizer" as used herein, refers to a composition that acts as a disinfectant and/or sanitizer. "Disinfecting/sanitizing" refers to the act of disinfecting and/or sanitizing. "Disinfection/sanitization" refers to the characteristic of being disinfecting and/or sanitizing.

"Powder" as used herein, means a free-flowing mixture of finely divided chemicals in dry form.

"Granule" as used herein, means an agglomerate of powdered chemicals prepared into larger, free-flowing particles of mixed composition

"Substantially free of" with respect to a component or class of components that has or have been specifically identified herein, means that that specifically identified component or class of components was not intentionally added or included.

### Peroxide Source Active

The peroxide source active can be any compound which can be a source of hydrogen peroxide when exposed to water including, in certain embodiments, water present as humidity. As can be appreciated, hydrogen peroxide is an effective disinfectant against a variety of microorganisms, including catalase-positive bacteria. To be effective against catalase-positive bacteria, a higher concentration of hydrogen peroxide must be used to overcome the bacteria's cytochrome systems generating the catalase. Hydrogen peroxide has been shown to be bactericidal against organisms having high cellular catalase activity such as *S. aureus, S. marcescens,* and *Proteus mirabilis,* but only at certain dosages. For example, catalase-positive bacteria need to be treated for 30-60 minutes with 0.6% hydrogen peroxide. Organisms with lower catalase activity, such as *Escherichia coli, Streptococcus* species, and *Pseudomonas* species, do not need as long of an exposure to be killed by hydrogen peroxide. Studies have found that such species require only 15 minutes of exposure to the same 0.6% hydrogen peroxide. (Schaeffer, 1980).

In certain aspects, the peroxide source active can be a persalt. Suitable persalts can be selected from percarbonate salt; perborate salt; perphosphate salt; persulfate salt; persilicate salt; peroxide salt; peracetate salt; and combinations thereof. Useful persalts may be associated with a cation that provides for an alkaline water-soluble persalt. Exemplary cations of use are alkali metals selected from: sodium; potassium; and combinations thereof. In some exemplary compositions, a persalt of use is sodium percarbonate having the formula: 2(Na₂CO₃)-ₙH₂O wherein n=1, 2 or 3, the "sodium percarbonate" having the hydrogen peroxide of crystallization.

Exemplary percarbonates of use may be coated, uncoated or combinations thereof. Some exemplary percarbonates of use are described in U.S. Pat. No. 7,241,433 to Jakob et al. and/or in U.S. Pat. No. 8,034,758 to Soentgerath. In some exemplary surface treatment powders, suitable sodium percarbonate is commercially available in the form of coated granulates to provide for enhanced stability. In certain aspects, the peroxide source can be granulated.

In certain aspects, the peroxide source is coated to improve the shelf stability of the surface treatment powder. For example, when the peroxide source is a percarbonate salt, the percarbonate salt is coated with sodium carbonate. In certain aspects, a suitable sodium percarbonate comprises about 80% to about 90% sodium percarbonate and about 5% to about 10% sodium carbonate. In certain aspects, more than one peroxide source is included.

In aspects, the surface treatment powders described herein include about 50% to about 70%, by weight, of the peroxide source active including amounts within about 50% to about 70% such as about 60% to about 67%, about 63% to about 65% and about 65% in various aspects.

### Anionic Surfactant Adjuvants

In aspects, the surface treatment powders include anionic surfactant adjuvants to provide enhanced antimicrobial efficacy. Specifically, the anionic surfactant adjuvants can increase the disinfectant kill speed of the peroxide source active particularly for catalase-positive bacteria. Without being bound by theory, it is believed that the anionic surfactant adjuvants can act as wetting agents - reducing surface tension and improving the spread of the hydrogen peroxide solution across the treatment surface when solubilized by water. Such wetting can enable the hydrogen peroxide generated by the peroxide active to disinfect the treated surface more quickly.

Generally, suitable anionic surfactants can vary widely and can include, without limitation, fatty alcohol sulfates, alpha-olefin sulfonates, and linear alkylbenzene sulfonates. For example, the surface treatment powders can include one or more of sulfuric acid, mono C12-14 alkyl ester sodium salts, benzenesulphonic acid, C1-13 alkyl derivative sodium salts, and sodium C14-C16 alpha olefin sulfonate in various aspects. At the alkaline pH of the surface treatment powder, the anionic surfactants do not present a negative charge, but can still demonstrate activity (Falk, 2019).

In certain aspects, the anionic surfactants is used in a dried solid form to enable the formation of a surface treatment powder which maintains good flowability. As can be appreciated, liquid anionic surfactants can cause agglomeration and loss of flowability even at low loading levels. In certain aspects, the anionic surfactants can be one or more of sodium lauryl sulfate ("SLS") and sodium dodecylbenzene sulfonate ("SDBS"). Selection of suitable anionic surfactants can vary depending on the interaction of the surfactants with the peroxide active to influence speed of kill as well as the desired amount of foaming when solubilized.

In aspects, the surface treatment powders described herein include about 1.0% to about 10%, by weight, of the anionic surfactant adjuvants including amounts within about 1.0% to about 10% such as about 1.5% to about 7.5%, about 1.75% to about 5%, about 2.25% to about 4.0% and about 2.5% to about 3.5%.

### Additional Components

In addition to the peroxide source active and the anionic surfactant adjuvants, the surface treatment powders can include various inactive components including pH buffers, fillers, alkalinity sources, chelants, colorants, humectants, carriers, binders, and anti-foaming agents in various aspects. As can be appreciated, certain compounds can exhibit multiple properties and can act, for example, as each of a pH buffer, filler, and humectant.

### Alkaline Salts

In aspects, alkaline salts are included in the surface treatment powders described herein. Such alkaline salts can perform several functions. First, the alkaline salts can function as a filler/diluent for the peroxide source active, which can improve the safety profile by reducing the oxidizing potential of the peroxide. Second, the alkaline salts can act as a humectant and can draw moisture into the surface treatment powder from the ambient humidity in the environment, providing some activation or solubilization of the active ingredients. The alkaline salts can also act as a source of alkalinity. Lastly, the alkaline salts can function with certain peroxide source actives to form a weak buffer system that maintains the product dilution pH between about 9 and about 11, such as between about 9.5 and about 10.5. In particular, when the peroxide source active is a sodium percarbonate including sodium carbonate, an alkaline salt such as sodium bicarbonate can form a weak buffer with the sodium carbonate. In certain aspects, the alkaline salts can have an ultra-coarse particle size to facilitate the inclusion of the highest amount of binder (such as a de-duster (to reduce dustiness)) while maintaining flowability of the product.

In certain aspects, suitable alkaline salts can include monocationic carbonate salts, bicarbonate salts and combinations thereof. Exemplary monocationic carbonate salts include: sodium carbonate, potassium carbonate, lithium carbonate, ammonium carbonate and combinations thereof. Exemplary bicarbonate salts include sodium bicarbonate, potassium bicarbonate, lithium bicarbonate, ammonium bicarbonate and combinations thereof. In certain aspects, suitable alkaline salts for the surface treatment powders described herein can include sodium bicarbonate or sodium sulfate. In certain aspects, more than one alkaline salt is included.

In aspects, the surface treatment powders described herein include about 20% to about 50%, by weight, of the alkaline salts including amounts within about 20% to about 50% by weight. In certain aspects, the amount of the alkaline salt forms the remainder of the surface treatment powders after all other components are added.

### Chelants

In aspects, chelants are be included in the surface treatment powders to extend the stability of hydrogen peroxide in the alkaline solution produced when the surface treatment powder is dissolved in water. There are many known chelants that exhibit synergy with hydrogen peroxide, and which can stabilize the hydrogen peroxide in solution for optimal solution stability once the product is solubilized. Any such chelant can be used as known in the art including, for example, tetrasodium ethylenediaminetetraacetic acid ("EDTA-Na₄"), trisodium dicarboxymethyl alaninate ("MGDA-Na₃"), and glutamic acid diacetic acid, tetra sodium salt ("GLDA-Na₄"). In certain aspects, a suitable chelant can be EDTA-Na₄. Generally, the chelant can be provided as a solid, anhydrous powder to minimize the moisture content of the formula and improve shelf stability.

In addition to stabilizing hydrogen peroxide, chelants can also enhance the antimicrobial efficacy of the surface treatment powder in solution. Chelants can help to reduce the inhibitory effects of hard water by chelating divalent cations like calcium.

The surface treatment powders described herein can include about 0.5% to about 10.0%, by weight, of the chelant including amounts within about 0.5% to about 10.0% such as about 0.5% about 8%, about 0.5% to about 5%, and about 0.75% to about 2.5%.

### Colorant

In certain aspects, the surface treatment powders includes a colorant. As can be appreciated, surface treatment powders including a colorant can be readily distinguished from other powdered materials that may be found in certain settings and can assist in even spreading of the surface treatment powders. For example, in food manufacturing and processing settings, beverage manufacturing and processing settings and in dairy settings, powdered processing components, ingredients, and/or food products, and/or beverages that are white or off-white may be commonly found (e.g., salt, flour, sugar, baking powder, baking soda, powdered milk, etc.). When in use, known white or off-white disinfectant/sanitizer powders may be easily confused with those ingredients, and/or food products, and/or beverages. Such confusion may lead to contamination of foodstuffs and beverages and/or kill organisms that are intentionally present in these environments (e.g., starter cultures, which are critical elements in the production of leavened baked goods, alcoholic beverages (e.g., beer, wine, spirits etc.) and cultured dairy products (e.g., sour cream, cottage cheese etc.)).

Generally, any colorant that has stability in the presence of peroxide and can maintain color both during the product's shelf life and when the product is dispensed and exposed to moisture can be used as known in the art. Suitable colorants include a dye, a pigment and combinations thereof. One of ordinary skill in the art will appreciate an appropriate colorant to use based upon the intended use of the powder. Exemplary surface treatment powders contain colorant that imparts a hue thereto, wherein the hue is selected from: blue; purple; green; red; or any other hue that differentiates an exemplary surface treatment powder from powdered processing components, ingredients, and/or food products, and/or beverages that are white or off-white and commonly found in certain settings (e.g., salt, flour, sugar, baking powder, baking soda, powdered milk, etc.). In the event that an exemplary surface treatment powder is to be used in an environment that contains colored powders, the exemplary surface treatment powder does not comprise a colorant and/or may comprise a white colorant, fluorescent colorant, etc., so that the surface treatment powder may be clearly distinguished from the colored powders that are in use.

In certain aspects, exemplary pigments of use are selected from: organic pigments, inorganic pigments and combinations thereof. Exemplary organic pigments may be selected from: azo pigments (e.g., condensed and/or chelate azo pigments); thiazoles; polycyclic pigments (e.g., phthalocyanines; anthraquinones (e.g., alizarin); quinacridones; thioindigoids; isoindolinones; and/or quinophthalones) and combinations thereof. These and other useful organic pigments may be found in U.S. Pat. No. 8,535,392 (Hong, et al.), incorporated herein by reference. Exemplary inorganic pigments may be selected from: black pigments (e.g., carbon black); iron-oxide earth pigments (e.g., hematite; hydroxide goethite; iron oxides; manganese oxides; and combinations thereof); chromium pigments (e.g., chromium oxide); cadmium pigments; metallic pigments; iron blue; and combinations thereof. Some exemplary inorganic pigments that may be of use are described in U.S. Pat. No. 10,836,732 to Hallenbach, incorporated herein by reference.

Suitable colorants for the surface treatment powders described herein can include pigments such as Orcoperm Ag Ultramarine Blue marketed by Organic Dyes and Pigments LLC ("ORCO") (Lincoln, RI); Pigment Blue 29; Direct Yellow 28; LX-8939 Permanent Aquamarine; Pylam Dark Violet LX-11400 from ORCO; and combinations thereof.

The surface treatment powders described herein can include about 0.01% to about 1.0%, by weight, of the colorant.

### Binders

As can be appreciated, the surface treatment powders can include several components that can become airborne during dispensing or application of the surface treatment powder. Such airborne particles can either present an irritation hazard or can drift to sensitive surfaces such as food contact surfaces. To ameliorate such dusting, a binder, such as a liquid de-duster, can be added to the surface treatment powder. It has been found that the presence of one or more dust-reducing additives can be used to bind solid particles of exemplary surface treatment powders without dissolving the powders or causing tackiness, and while still providing for a free-flowing product. Binders, like polyethylene glycol or EO-PO block copolymers, for example, can have a dust-reducing function in exemplary surface treatment powders, without negatively impacting sanitizer level efficacy. Thus, unlike some known powder surface treatment compositions that are substantially free of binders, particularly, substantially free of polyethylene glycol or EO-PO block copolymers, exemplary surface treatment powders that include binders as described herein can be less prone to becoming airborne when removed from their container.

Generally, suitable binders include nonionic surfactants that are substantially free of water (e.g., EO-PO block copolymers, fatty alcohol ethoxylates, alkylpolyglycosides and combinations thereof), mineral oil and/or combinations of higher alkanes; glycols such as polyethylene glycol, propylene glycol and/or ethylene glycol; and combinations thereof. In certain aspects, suitable binders for the surface treatment powders described herein include polyethylene glycol having an average molecular weight of from about 200 to about 1,000 g/mol and/or EO-PO block copolymers having an HLB from about 2 to about 9. Exemplary EO-PO block copolymers of use include, but are not limited to, poloxamer 181, poloxamer 182, poloxamer 331 and combinations thereof. Some exemplary non-ionic surfactants of use that include those that are not characterizable by an HLB value; theses surfactants include alcohols that are insoluble when present in deionized water at above 1% (w/vol).

In aspects, a binder is included in the surface treatment powders at a level that reduces the dustiness of the formula but does not impact the flow and dispensing of the product (e.g., does not cause caking). As can be appreciated, certain binders, such as polyethylene glycol, can also be hydroscopic. Such binders can act as a humectant for the surface treatment powders described herein, either alone or in combination with other humectants such as sodium bicarbonate.

In aspects, the surface treatment powders described herein include about 0.01% to about 2.0%, by weight, of the binder including any ranges within the about 0.01% to about 2.0%, by weight, range.

### Surface Treatment Powders

Generally, the disclosed surface treatment powders is a flowable product that is easy to apply to treat hard surfaces. For example, the surface treatment powders can be dispensed onto a hard surface through a variety of methods including pouring, spreading, dispensing via spreading equipment, etc.

In aspects, the surface treatment powders is considered a disinfectant as defined by testing standards EN 1276 and EN 13697. EN 1276 is a phase 2, step 1 suspension test used to determine bactericidal activity of products used in the food, industrial, domestic and institutional areas. The standard challenge organisms include *Pseudomonas aeruginosa, Escherichia coli, Staphylococcus aureus* and *Enterococcus hirae*; however, additional organisms of relevance to food production may also be included such as *Listeria monocytogenes* and *Salmonella enterica.* In the EN 1276 suspension test, 8 parts of the test product are added to 1-part test microorganism and 1-part interfering substance. The mixture is then allowed to react at the desired temperature and contact time followed by neutralization and subsequent plate counting to determine the log reduction in bacteria. A 5-log reduction is required to pass EN 1276.

EN 13697 is a phase 2 step 2 carrier test used to determine the bactericidal activity of products used in the food, industrial, domestic and institutional areas. The challenge organisms are the same as EN 1276. In the EN 13697 test 1-part test organism is mixed with 1-part interfering substance, and an aliquot is applied to a stainless steel carrier and dried. The test product is applied over the dried spot and incubated at the desired temperature and contact time. This is followed by neutralization and subsequent plate counting to determine the log reduction. A 4-log reduction in bacteria is required to pass EN 13697.

In aspects, the surface treatment powders demonstrate fungicidal activity. An example powder was tested against the yeast *Candida albicans* using modified versions of EN 1650 and EN 13697. EN 1650 is similar to EN 1276 but uses fungi as target organisms with a required 4-log reduction. EN 13697 for fungi requires a 3-log reduction. Both methods were modified to incorporate plate counts < 14 CFU.

The surface treatment powders described herein can exhibit biocidal reduction in bacteria count without being considered an oxidizer under UN/DOT (Division 5.1) Test O.1: Test for Oxidizing Solids. Surface treatment powders described herein including up to 70.37%, by weight, sodium percarbonate were independently evaluated and found to not be an oxidizer under the UN/DOT (Division 5.1) test. Independent testing found that the described surface treatment powders had between 8.2% available oxygen for 63%, by weight, sodium percarbonate and 9.5% available oxygen for surface treatment powders including 70.37%, by weight, sodium percarbonate. As can be appreciated, many other known surface treatment powders can be corrosive or oxidizing.

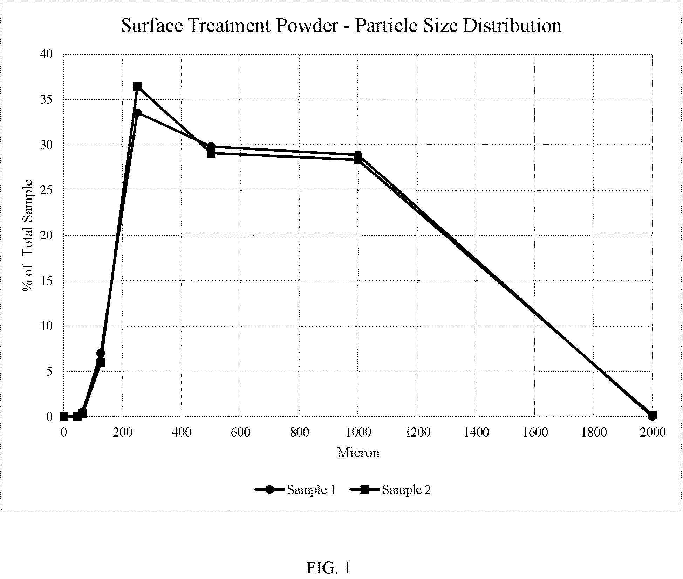

In certain aspects, the surface treatment powder has a density of about 1 g/mL to about 2 g/mL and can have an average particle size of about 310 microns. A particle size distribution is depicted in FIG. 1.

Exemplary methods of treating a surface include applying to the surface a surface treatment powder as described herein. Exemplary methods further comprise steps selected from: cleaning the surface, sanitizing the surface, disinfecting the surface, and combinations thereof.

Generally, the surface treatment powders can be widely used to treat and sanitize various surfaces. For example, in aspects, the surface treatment powders is used to treat hard surfaces in household, institutional, and industry applications including in wet and dry environments. In certain aspects, the surface treatment powders is used to treat footwear, and the methods include placing the surface treatment powder in a foot pan, an entryway, footpath areas, around a drain, or a drain cover. In certain aspects, the surface treatment powders is applied dry and allowed to activate through application of incidental water such as environmental water.

Some exemplary methods comprise treatment of footwear with exemplary surface treatment powders and comprise dispensing an exemplary surface treatment powder into a foot pan or any other surface where people walk (e.g., a floor, in a doorway, at a threshold, etc.).

Exemplary methods of treating footwear comprise dispensing an exemplary surface treatment powder into a foot pan or surface where people walk. For example, in aspects, the layer of surface treatment powder dispensed is at a level of about ½-inch, or more. In aspects, the methods comprise changing the foot powder about every 4 to about every 12 weeks, from about every 4 to about every 10 weeks, from about every 4 to about every 8 weeks or from every 4 to 6 weeks. In aspects, the foot powder is changed about every 6 to about every 10 weeks. Such exemplary methods maintain benefits selected from: cleaning, odor control, disinfection, sanitization and combinations thereof.

In some exemplary methods of using surface treatment powders, the surface treatment powders effectively treats a surface to which the surface treatment powder has been applied or that has otherwise been exposed to the surface treatment powder for a period of time. Thus, some exemplary methods comprise leaving a surface treatment powder on a surface for a period of time and supplementing or replacing the surface treatment powder with additional surface treatment powder from time to time. Such supplementation may be advantageous when some or all of the surface treatment powder that is present in/on a surface is dissolved as described herein and/or otherwise contaminated (e.g., with dirt and/or debris) and/or depleted (e.g., kicked out of a foot pan, unintentionally scattered, etc.).

Advantageously, some exemplary methods of disinfecting/sanitizing a surface do not require diluting powder prior to application to a hard surface to be treated, waiting for an effective amount of hydrogen peroxide to be generated, and/or successively rinsing the applied solution afterwards. But rather, exemplary surface treatment powders are applied to a surface and hydrogen peroxide is generated as exposure to moisture and/or liquid occurs as assisted by the solid anionic surfactants. As a result, hydrogen peroxide may not be generated and depleted all at once and is instead generated over time.

Generally, the surface treatment powders described herein can be formed by mixing each of the components together in the absence of water. In certain aspects, binder can be added last to ensure homogenous distribution.

### EXAMPLES

### Sodium Percarbonate and Sodium Bicarbonate Examples

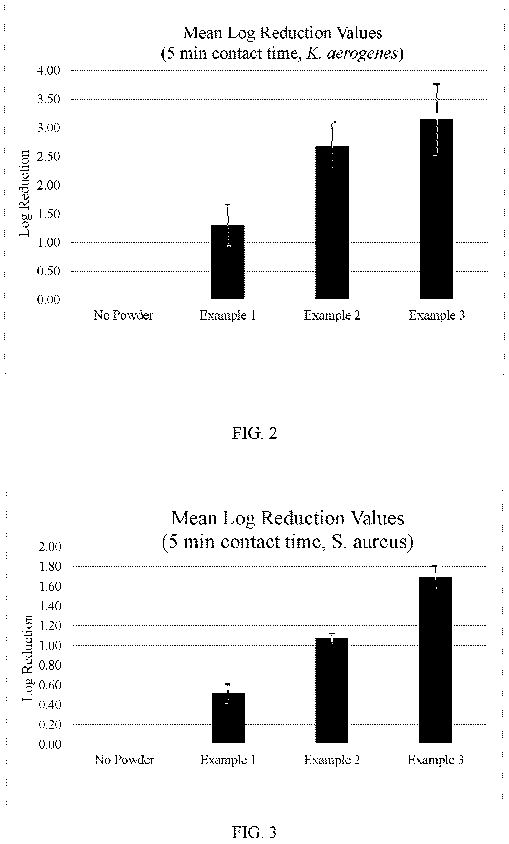

To evaluate whether sodium percarbonate and sodium bicarbonate could function as a biocide in the absence of an anionic surfactant adjuvant, a Jar Test was performed. In the Jar Test, 2g of an Example composition was placed in the bottom of a sterile jar, inoculated with 1 mL of inoculum, incubated for 5 minutes at room temperature, and then neutralized and diluted for plating. Each Example was tested against *K. aerogenes* (ATCC 13048) and *S. aureus* (ATCC 6538). No Example composition was considered inventive as none exhibited biocidal properties within the desired 5 minute contact time. Comparative Example 1 included 20% sodium percarbonate and 80% sodium bicarbonate. Comparative Example 2 included 50% sodium percarbonate and 50% sodium bicarbonate. Comparative Example 3 included 80% sodium percarbonate and 20% sodium bicarbonate. The results of evaluating with *K. aerogenes* are depicted in FIG. 2 while the results of evaluating with *S. aureus* are depicted in FIG. 3.

As depicted in FIGS. 2 and 3, increasing amounts of sodium percarbonate increased the biocidal effect but were unable to achieve a 5-log bacterial reduction within 5 minutes of contact time. *S. aureus* was also found to be the more challenging organism for the sodium percarbonate to kill.

### Sodium Percarbonate, Chelant, and Surfactant Examples

The use of adjuvant ingredients and other inactive ingredients to boost the efficacy of sodium percarbonate was evaluated. The evaluated adjuvants and inactive ingredients included chelants, binders, and various anionic and non-ionic surfactants. Chelants included EDTA, binders included PEG, anionic surfactants included dodecyl benzene sulfonic acid ("DDBSDA"), and nonionic surfactants included an ethoxylated alcohol marketed as Tomadol^{®} 400 by Evonik Operations GmbH (Essen, Germany). The remainder of each Example was sodium bicarbonate. The evaluated compositions are depicted in Table 1, by weight.

**TABLE 1**

| **Example** | **Sodium Percarbonate** | **Sodium Bicarbonate** | **Chelant (EDTA)** | **Binder (PEG)** | **Anionic Surfactant (DDBSA)** | **Non-Ionic Surfactant (Tomadol^{®} 400)** |
|---|---|---|---|---|---|---|
| 4 | 50% | Q.S. | 5% | 1% | -- | -- |
| 5 | 80% | Q.S. | 5% | 1% | -- | -- |
| 6 | 50% | Q.S. | 5% | 0.5% | 0.5% | -- |
| 7 | 80% | Q.S. | 5% | 0.5% | 0.5% | -- |
| 8 | 50% | Q.S. | 5% | -- | 0.5% | 0.25% |
| 9 | 80% | Q.S. | 5% | -- | 0.5% | 0.25% |

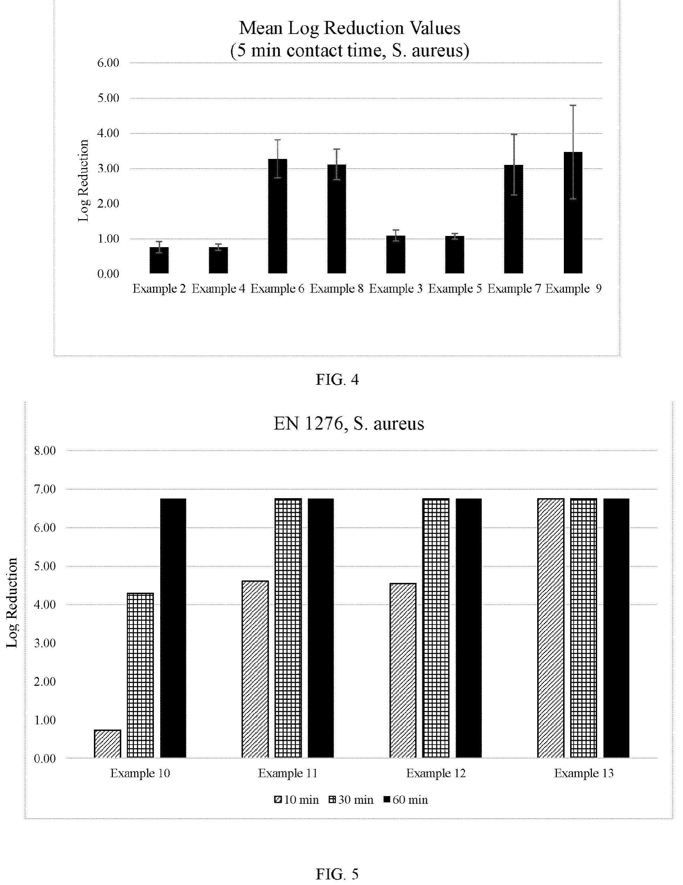

Examples 4 to 9, as well as comparative Examples 2 and 3 were evaluated using the Jar Test with *S. aureus.* The results of the evaluation are depicted in FIG. 4.

As depicted in FIG. 4, the addition of an anionic surfactant as an adjuvant ingredient was found to be significant with each example including an anionic surfactant (Examples 6 to 9) having a log reduction of greater than 3 while the remaining examples that were free of an anionic surfactant had a log reduction of about 1 or less. Examples 2 to 9 are all considered comparative Examples as they do not demonstrate a 5-log reduction in bacteria.

Additional Examples 10 to 13 having sodium percarbonate, sodium bicarbonate, chelant selected from EDTA and MGDA, and anionic surfactant selected from sodium lauryl sulfate ("SLS"), alpha olefin sulfonate ("AOS"), and sodium dodecylbenzene sulfonate ("SDBS") were formed. The formulations for Examples 10-13 are depicted in Table 2, by weight percentage.

**TABLE 2**

| **Example** | **Sodium Percarbonate** | **Sodium Bicarbonate** | **Chelant (EDTA)** | **Chelant (MGDA)** | **Anionic Surfactant (SLS)** | **Anionic Surfactant (AOS)** | **Anionic Surfactant (SDBS)** |
|---|---|---|---|---|---|---|---|
| 10 | 65% | 35% | -- | -- | -- | -- | -- |
| 11 | 65% | 25% | 5% | -- | 2.5% | 2.5% | -- |
| 12 | 65% | 25% | -- | 5% | 2.5% | 2.5% | -- |
| 13 | 65% | 25% | 5% | -- | 2.5% | -- | 2.5% |

Examples 10 to 13 were evaluated in accordance with European Standard EN 1276 (2019) for reduction of *S. aureus.* The reduction in bacteria were evaluated at 10 minutes, 30 minutes, and 60 minutes. The results of the evaluation are plotted in FIG. 5.

As depicted in FIG. 5, each Example, including Example 10 with only sodium percarbonate and sodium bicarbonate, was able to effectively reduce *S. aureus* past the requisite 5-log threshold given sufficient time. Inclusion of surfactants, as in Example 13, was able to reduce the time required to reduce the bacteria by a 5-log amount.

### Anionic Surfactants

Example compositions 10 and 13 were further evaluated to determine their log reductions for *S. aureus* and other EN 1276 standard test organisms at the desired 5-minute contact time. The results of this evaluation are depicted in Table 3.

**TABLE 3**

| | *E. hirae* (5 min.; 10 min.; 30 min. log reduction) | *E. coli* (5 min.; 10 min.; 30 min. log reduction) | *P. aeruginosa* (5 min.; 10 min.; 30 min. log reduction) | *S. aureus* (5 min.; 10 min.; 30 min. log reduction) |
|---|---|---|---|---|
| Example 10 | <1.6; <1.6; 5.78 | 6.84; 6.84; 6.84 | 6.77; 6.77; 6.77 | <2.25; <2.25; 7.03 |
| Example 13 | 6.38; 6.38; 6.38 | 6.84; 6.84; 6.84 | 6.77; 6.77; 6.77 | 5.69; 7.03; 7.03 |

As depicted in Table 3, 65% sodium percarbonate was found to be capable of achieving a 5-log reduction of bacteria but requires greater than 5 minutes for both *E. hirae* and *S. aureus.* Addition of dry anionic surfactants and a chelant enables the same concentration of sodium percarbonate to achieve a 5-log reduction within 5 minutes.

### Bactericidal and Fungicidal Testing

Example 13 was further evaluated at different concentrations for bactericidal and fungicidal performance under EN 1276, EN 13697, and modified versions of EN 1650 and EN 13697. Table 4 depicts log reduction values from testing Example 13 at various concentrations in hard water using EN 1276 (suspension test) under dirty conditions (3 g/L BSA) at 20°C with contact times of 5 min and 10 min. A > 5 log reduction is required to pass the test. Table 5 depicts log reduction values from testing Example 13 at various concentrations in hard water using EN 13697 (carrier test) under dirty conditions (3 g/L BSA) at 20°C with contact times of 5 min and 10 min. A > 4 log reduction is required to pass the test. Table 6 depicts log reduction values from testing Example 13 against the yeast *Candida albicans* using modified versions of EN 1650 and EN 13697. The powder was tested at 150 g/L in hard water under dirty conditions (3 g/L BSA) at 20°C with a 10 min contact time.

**TABLE 4**

| **5 min contact time** | **100 g/kg** | **125 g/kg** | **150 g/kg** |
|---|---|---|---|
| *Staphylococcus aureus* ATCC 6538 | >5.12 | >5.12 | >5.12 |
| *Enterococcus hirae* ATCC 10541 | >5.11 | >5.11 | >5.11 |
| *Escherichia coli* ATCC 10536 | >5.05 | >5.05 | >5.05 |
| *Pseudomonas aeruginosa* ATCC 15442 | >5.06 | >5.06 | >5.06 |
| *Listeria monocytogenes* ATCC 15313 | >5.53 | >5.53 | >5.53 |
| *Salmonella enterica* ATCC 13311 | 4.58 | >5.53 | >5.53 |

| **10 min contact time** | **100 g/kg** | **125 g/kg** | **150 g/kg** |
|---|---|---|---|
| *Staphylococcus aureus* ATCC 6538 | >5.12 | >5.12 | >5.12 |
| *Enterococcus hirae* ATCC 10541 | >5.11 | >5.11 | >5.11 |
| *Escherichia coli* ATCC 10536 | >5.05 | >5.05 | >5.05 |
| *Pseudomonas aeruginosa* ATCC 15442 | >5.06 | >5.06 | >5.06 |
| *Listeria monocytogenes* ATCC 15313 | >5.53 | >5.53 | >5.53 |
| *Salmonella enterica* ATCC 13311 | >5.53 | >5.53 | >5.53 |

**TABLE 5**

| **5 min contact time** | **100 g/kg** | **125 g/kg** | **150 g/kg** |
|---|---|---|---|
| *Staphylococcus aureus* ATCC 6538 | 2.21 | 2.66 | 2.77 |
| *Enterococcus hirae* ATCC 10541 | >5.72 | >5.72 | >5.72 |
| *Escherichia coli* ATCC 10536 | >4.92 | >4.92 | >4.92 |
| *Pseudomonas aeruginosa* ATCC 15442 | >5.00 | >5.00 | >5.00 |
| *Listeria monocytogenes* ATCC 15313 | >5.42 | >5.42 | >5.42 |
| *Salmonella enterica* ATCC 13311 | >5.16 | >5.16 | >5.16 |

| **10 min contact time** | **100 g/kg** | **125 g/kg** | **150 g/kg** |
|---|---|---|---|
| *Staphylococcus aureus* ATCC 6538 | 2.71 | 3.40 | 4.11 |
| *Enterococcus hirae* ATCC 10541 | >5.69 | >5.69 | >5.69 |
| *Escherichia coli* ATCC 10536 | >4.90 | >4.90 | >4.90 |
| *Pseudomonas aeruginosa* ATCC 15442 | >4.96 | >4.96 | >4.96 |
| *Listeria monocytogenes* ATCC 15313 | >5.42 | >5.42 | >5.42 |
| *Salmonella enterica* ATCC 13311 | >5.22 | >5.22 | >5.22 |

**TABLE 6**

| | **EN 1650** | **EN 13697** |
|---|---|---|
| *Candida albicans* ATCC 10231 | ≥5.42 | ≥ 3.26 |

As depicted in Tables 4 to 6, Example 13 exhibited strong log reduction performance against various strains of bacteria and further demonstrated fungicidal performance. Example 13 was particularly effective against *Listeria monocytogenes* and *Salmonella enterica* which are of particular concern for food processing.

### Chelant Loading Levels

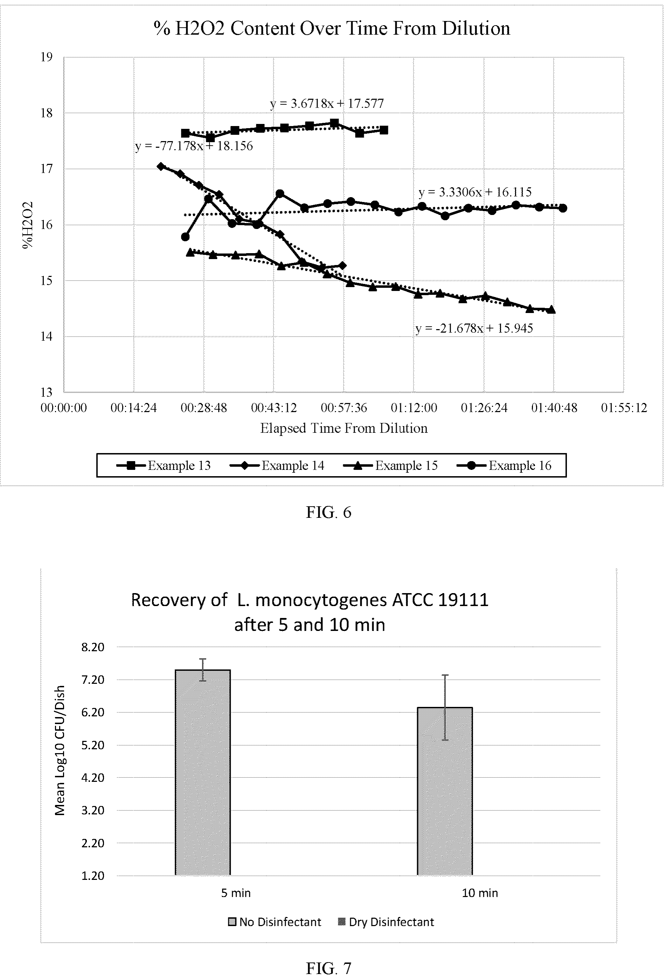

Further examples of surface treatment powders were formed to evaluate the ability of a chelant to support stability of hydrogen peroxide at alkaline pHs. Examples 14, 15, and 16 were formulated that differed from Example 13 in the amount and type of chelant. Example 14 included no added chelant; Example 15 included 2.5% MGDA while Example 16 included 0.75% EDTA. The examples were dissolved in water and the resulting hydrogen peroxide percentage in solution over time for each of Examples 13, 14, 15, and 16 are depicted in FIG. 6.

As depicted in FIG. 6, Example 14 exhibited the fastest decrease in hydrogen peroxide in solution over time while the remaining Examples, including Example 16 having just 0.75% EDTA, exhibited similar stability.

### Simulated Footwear Contamination Testing

Example 13 was further evaluated to determine if it could prevent cross contamination from contaminated footwear using a "Mini Boot Test."

The Mini Boot Test was developed to demonstrate the ability of surface treatment powders to prevent cross contamination from contaminated footwear. A series of four deep well Petri dishes were laid out in a row. Example surface treatment powder (2.0 g = 352 g/m²) was added to the first Petri dish and evenly distributed. An additional series of four Petri dishes were laid out in a 2^{nd} row but no surface treatment powder was added (control).

A test organism (*Salmonella enterica* or *Listeria monocytogenes*) was grown for 24 h at 35 °C in liquid media (e.g., Tryptic soy broth). The boot inoculum was prepared by mixing 1 ml of 24 h culture, 8.5 ml of diluent (e.g., dilute phosphate buffer) and 0.5 ml of soil (e.g., fetal bovine serum). Five boot stamps (1 x 5 cm) were inoculated with 0.1 ml of the inoculum spread across eight spots on the boot surface. Each stamp was then walked through the Petri dish containing surface treatment powder and then into the three subsequent Petri dishes. This was repeated using the remaining four boot stamps. Five additional boot stamps were inoculated and walked through the four control Petri dishes.

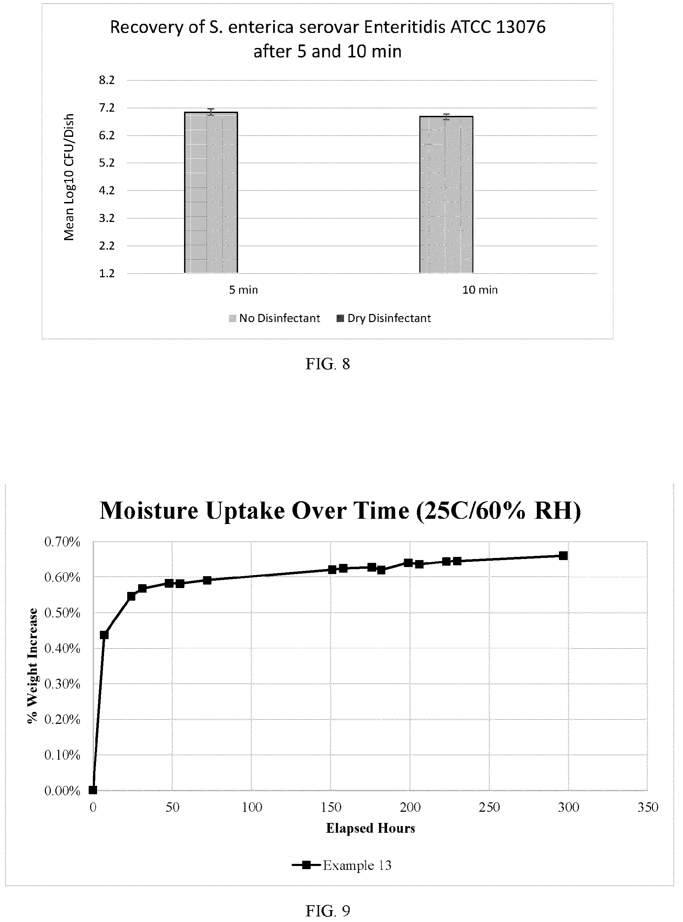

After the last plate was stamped the plates were incubated at room temperature for 5 and 10 min. A neutralization solution (e.g., 2x D/E with catalase) was then added to the last three Petri dishes of either the treated or non-treated row of plates to neutralize residual surface treatment powder and dislodge the bacteria. A series of 1:10 dilutions were prepared from the neutralization solution in each plate and spread plated onto an appropriate agar media (e.g., Tryptic soy agar). After a 48 h incubation at 35°C, the plates were counted and the number of colony forming units (CFU) per dish determined. The log₁₀ CFU/dish was determined along with the mean and standard deviation from the three dishes. The results of evaluating Example 13 as the surface treatment powder are shown in FIGS. 7 and 8.

As depicted in FIGS. 7 and 8, five minutes after walking the contaminated boot stamps through four empty Petri dishes (control), a mean log value ranging from 7.0 to 7.5 (1 x 10⁷ to 3.2 x10⁷ CFU) was recovered from the last three Petri dishes. If the stamps were walked through surface treatment powder first, the recovery of bacteria in the last three Petri dishes was below the detection limit of log 1.2 (16 CFU). Therefore, the surface treatment powder reduced the bacterial count in subsequent Petri dishes by > 5 log values (99.999%).

### Moisture Uptake and Efficacy

Example 13 was further evaluated for ambient moisture uptake by placing two samples in ambient air having a temperature of 25 °C and a relative humidity of 60%. The moisture uptake as a weight percentage increase over time is depicted in FIG. 9.

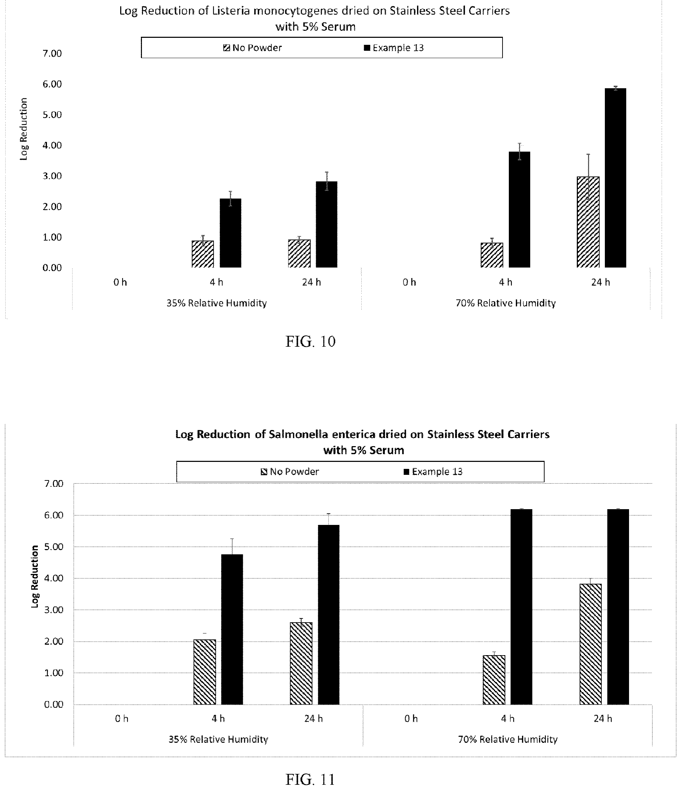

Example 13 was tested to determine if ambient moisture (i.e., relative humidity) was sufficient to generate bactericidal activity in the absence of water. Broth cultures of *Listeria monocytogenes* and *Salmonellla enterica* were mixed with soil (5% fetal bovine serum) and applied to stainless steel carriers. The carriers were dried at 20°C and 35% or 70% relative humidity (RH). Ater drying, the example powder was applied over the surface of the carriers ensuring coverage of the dried inoculum, and the carriers were placed back in their respective incubators. An additional set of carriers were used as controls (no powder). After 4 h and 24 h, a subset of carriers (control and treated) was removed and vigorously mixed with a neutralization solution (2x D/E with 0.2% catalase). A series of 1:10 dilutions were prepared from the neutralization solution and spread plated onto an appropriate agar media (e.g., Tryptic soy agar). After incubation the plates were counted and the number of colony forming units (CFU) per carrier determined. The log₁₀ CFU/carrier was determined along with the mean and standard deviation from three replicates. Log reduction values were determined by subtracting the mean count of treated and control carriers from the initial count deposited on the carriers. The results of testing *Listeria monocytogenes* are depicted in FIG. 10 while the results of testing *Salmonella enterica* are depicted in FIG. 11.

As depicted in FIGS. 10 and 11, bacterial viability decreased as desiccation progressed even in the absence of powder. However, when powder was present the loss of bacterial viability was enhanced. After addition of powder the log reduction values for *Salmonella enterica* increased by a range of 2.4 to 4.6 depending on the humidity and contact time. For *Listeria monocytogenes,* the log reduction values increased by 1.4 to 3.0.

### Exemplary Aspects of the Disclosure

A1. According to one aspect, a surface treatment powder includes:
   a) a peroxide source active;
   b) an anionic surfactant adjuvant; and
   c) an alkaline salt.
A2. The surface treatment powder of aspect A1, wherein the peroxide source active includes a percarbonate salt or a persalt.
A3. The surface treatment powder of any previous aspect, wherein the peroxide source active includes sodium percarbonate.
A4. The surface treatment powder of any previous aspect, wherein the anionic surfactant adjuvant includes one or more of fatty alcohol sulfates, alpha-olefin sulfonates, and linear alkylbenzene sulfonates.
A5. The surface treatment powder of any previous aspect, wherein the anionic surfactant adjuvant includes sodium lauryl sulfate and sodium dodecylbenzene sulfonate.
A6. The surface treatment powder of any previous aspect, wherein the alkaline salt includes sodium bicarbonate.
A7. The surface treatment powder of any previous aspect further includes a chelant.
A8. The surface treatment powder of aspect A7, wherein the chelant includes ethylenediaminetetraacetic acid ("EDTA").
A9. The surface treatment powder of any previous aspect further includes a binder.
A10. The surface treatment powder of aspect A9, wherein the binder includes polyethylene glycol.
A11. The surface treatment powder of any previous aspect is substantially free of quaternary ammonium compounds and bleach activator.
A12. The surface treatment powder of any previous aspect includes, by weight:
   about 50% to about 70% of the peroxide source active;
   about 1.0% to about 10% of the anionic surfactant adjuvant; and
   about 20% to about 50% of the alkaline salt.
A13. The surface treatment powder of aspect A12 comprises, by weight:
   about 50% to about 70% of the peroxide source active;
   about 1.0% to about 10% of the anionic surfactant adjuvant;
   about 20% to about 50% of the alkaline salt;
   about 0.5% to about 10% of a chelant; and
   about 0.01% to about 2.0% of a binder.
A14. The surface treatment powder of aspect A13, wherein:
   the peroxide source active includes sodium percarbonate;
   the anionic surfactant adjuvant includes sodium lauryl sulfate, sodium dodecylbenzene sulfonate, or a combination thereof;
   the alkaline salt includes sodium bicarbonate;
   the chelant includes ethylenediaminetetraacetic acid ("EDTA"); and
   the binder includes polyethylene glycol.
A15. The surface treatment powder of any previous aspect, wherein the surface treatment powder exhibits a product density of about 1.0 g/mL to about 2.0 g/mL.
A16. The surface treatment powder of any previous aspect, wherein the surface treatment powder exhibits an average particle size of about 310 microns.
A17. The surface treatment powder of any previous aspect, wherein the surface treatment powder exhibits bactericidal activity under European Standard EN 1276 (2019).
A18. The surface treatment powder of any previous aspect, wherein the surface treatment powder exhibits fungicidal activity under modified European Standard EN 1650 or modified EN 13697
A19. The surface treatment powder of any previous aspect, wherein the surface treatment powder is non-oxidizing under UN/DOT (Division 5.1) Test O.1.
B. According to one aspect, a surface treatment powder consisting essentially of, by weight percent:
   about 50% to about 70% sodium percarbonate;
   about 1.0% to about 10% of sodium lauryl sulfate, sodium dodecylbenzene sulfonate or a combination thereof;
   about 20% to about 50% of sodium bicarbonate;
   about 0.5% to about 10% of ethylenediaminetetraacetic acid ("EDTA");
   about 0.01% to about 2.0% polyethylene glycol; and
   a colorant.
C 1. According to one aspect, a method of treating a surface, the method comprising applying to the surface a surface treatment powder including:
   a) a peroxide source active;
   b) an anionic surfactant adjuvant; and
   c) an alkaline salt.
C2. The method of aspect C1, further including one or more of cleaning the surface, sanitizing the surface, disinfecting the surface, and combinations thereof.
C3. The method of aspect C1 or C2, wherein the surface is in a food processing facility, in an animal or human health care facility, in a dairy, on a poultry farm, or on a swine farm.
C4. The method of any of aspects C1 to C3, wherein the surface to be treated is footwear, the method further including placing the surface treatment powder in a foot pan.

The dimensions and values disclosed herein are not to be understood as being strictly limited to the exact numerical values recited. Instead, unless otherwise specified, each such dimension is intended to mean both the recited value and a functionally equivalent range surrounding that value.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

Every document cited herein, including any non-patent literature, cross-referenced or related patents or applications, are hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests, or discloses any such invention. Further, to the extent that any meaning or definition of a term in this document conflicts with any meaning or definition of the same term in a document incorporated by reference, the meaning or definition assigned to that term in the document shall govern.1

The foregoing description of embodiments and examples has been presented for purposes of description. It is not intended to be exhaustive or limiting to the forms described. Numerous modifications are possible in light of the above teachings. Some of those modifications have been discussed and others will be understood by those skilled in the art. The embodiments were chosen and described for illustration of various embodiments. The scope is, of course, not limited to the examples or embodiments set forth herein, but can be employed in any number of applications and equivalent articles by those of ordinary skill in the art. Rather it is hereby intended the scope be defined by the claims appended hereto.

It should be understood that certain aspects, features, structures, or characteristics of the various embodiments can be interchanged in whole or in part. Reference to certain embodiments mean that a particular aspect, feature, structure, or characteristic described in connection with certain embodiments can be included in at least one embodiment and may be interchanged with certain other embodiments. The appearances of the phrase "in certain embodiments" in various places in specification are not necessarily all referring to the same embodiment, nor are certain embodiments necessarily mutually exclusive of other certain embodiments. It should also be understood that the steps of the methods set forth herein are not necessarily required to be performed in the orders described, and the order of the steps of such methods should be understood to be merely exemplary. Likewise, additional steps can be included in such methods, and certain steps may be omitted or combined, in methods consistent with certain embodiments.

### References:

Schaeffer AJ, Jones JM, Amundsen SK. Bacterial effect of hydrogen peroxide on urinary tract pathogens. Appl Environ Microbiol. 1980 Aug;40(2):337-40. doi: 10.1128/aem.40.2.337-340.1980. PMID: 6781405; PMCID: PMC291577.
Nancy A. Falk, Surfactants as Antimicrobials: A Brief Overview of Microbial Interfacial Chemistry and Surfactant Antimicrobial Activity, Journal of Surfactants and Detergents, 10.1002/jsde.12293, 22, 5, (1119-1127), (2019).
Wada A, Kono M, Kawauchi S, Takagi Y, Morikawa T, Funakoshi K. Rapid discrimination of Gram-positive and Gram-negative bacteria in liquid samples by using NaOH-sodium dodecyl sulfate solution and flow cytometry. PLoS One. 2012;7(10):e47093. doi: 10.13711journal.pone.0047093. Epub 2012 Oct 15. PMID: 23077549; PMCID: PMC3471971.
Johnston, M. D., Simons, E. A., & Lambert, R. J. W. (2000) One explanation for the variability of the bacterial suspension test. Journal of Applied Microbiology, 88:237-242.

## Claims

1. A surface treatment powder comprising:
a) a peroxide source active;
b) an anionic surfactant adjuvant; and
c) an alkaline salt.

2. The surface treatment powder of claim 1, wherein the peroxide source active comprises a percarbonate salt or a persalt.

3. The surface treatment powder of any previous claim, wherein the peroxide source active comprises sodium percarbonate.

4. The surface treatment powder of any previous claim, wherein the anionic surfactant adjuvant comprises one or more of fatty alcohol sulfates, alpha-olefin sulfonates, and linear alkylbenzene sulfonates.

5. The surface treatment powder of any previous claim, wherein the anionic surfactant adjuvant comprises sodium lauryl sulfate and sodium dodecylbenzene sulfonate.

6. The surface treatment powder of any previous claim, wherein the alkaline salt comprises sodium bicarbonate.

7. The surface treatment powder of any previous claim further comprises one or more of a chelant and a binder.

8. The surface treatment powder of claim 7, wherein the chelant comprises ethylenediaminetetraacetic acid ("EDTA") and the binder comprises polyethylene glycol..

9. The surface treatment powder of any previous claim is substantially free of quaternary ammonium compounds and bleach activator.

10. The surface treatment powder of any previous claim comprises, by weight:
about 50% to about 70% of the peroxide source active;
about 1.0% to about 10% of the anionic surfactant adjuvant; and
about 20% to about 50% of the alkaline salt.

11. The surface treatment powder of any previous claim comprises, by weight:
about 50% to about 70% of the peroxide source active;
about 1.0% to about 10% of the anionic surfactant adjuvant;
about 20% to about 50% of the alkaline salt;
about 0.5% to about 10% of a chelant; and
about 0.01% to about 2.0% of a binder.

12. The surface treatment powder of any previous claim, wherein the surface treatment powder exhibits one or more of:
a product density of about 1.0 g/mL to about 2.0 g/mL;
an average particle size of about 310 microns;
bactericidal activity under European Standard EN 1276 (2019);
fungicidal activity under modified European Standard EN 1650 or modified EN 13697; and
non-oxidizing under UN/DOT (Division 5.1) Test O.1.

13. The surface treatment powder of any previous claim consisting essentially of, by weight percent:
about 50% to about 70% sodium percarbonate;
about 1.0% to about 10% of sodium lauryl sulfate, sodium dodecylbenzene sulfonate or a combination thereof;
about 20% to about 50% of sodium bicarbonate;
about 0.5% to about 10% of ethylenediaminetetraacetic acid ("EDTA");
about 0.01% to about 2.0% polyethylene glycol; and
a colorant.

14. A method of treating a surface, the method comprising applying to the surface a surface treatment powder comprising:
a) a peroxide source active;
b) an anionic surfactant adjuvant; and
c) an alkaline salt.

15. The method of claim 14, further comprising one or more of cleaning the surface, sanitizing the surface, disinfecting the surface, and combinations thereof.
